# EUROPÄISCHE PATENTANMELDUNG

(11) **EP 1 997 841 A2**
(43) Veröffentlichungstag der Anmeldung: **03.12.2008**
(21) Anmeldenummer: 08009322.2
(22) Anmeldetag: 21.05.2008
(51) Int. Cl.: C08G 18/08, C08G 18/10, C08G 18/42, C08G 18/76

(54) **Verfahren zur Herstellung von thermoplastischen Polyurethanen auf Basis von 1,5-Naphthalindiisocyanat**

(30) Priorität: 01.06.2007 DE 102007025660; 22.06.2007 DE 102007028921; 06.07.2007 DE 102007031546
(71) Anmelder: Bayer MaterialScience AG, 51368 Leverkusen (DE)
(72) Erfinder: Nefzger, Hartmut, Dr., 50259 Pulheim (DE); Barnes, James-Michael, 53547 Breitscheid (DE); Wussow,Hans-Georg,Dr., 40597 Düsseldorf (DE); Krause, Jens, Dr., 51063 Köln (DE)

(57) **Zusammenfassung**

Die vorliegende Erfindung betrifft ein Verfahren zur Herstellung von thermoplastischen Polyurethanen auf Basis von lagerstabilen, 1,5-NDI-basierten NCO-Prepolymeren.

## Beschreibung

Die vorliegende Erfindung betrifft ein Verfahren zur Herstellung von thermoplastischen Polyurethanen (TPU) auf Basis 1,5-Naphthalindiisocyanat (NDI).

TPU sind seit vielen Jahren bekannt und finden breite Verwendung. Im Allgemeinen sind sie überwiegend aus linearen Bausteinen aufgebaut und beinhalten langkettige Polyole, Diisocyanate und kurzkettige Diole (Kettenverlängerer). Durch Wahl der Art der Aufbaukomponenten und deren Stöchiometrie können die Materialeigenschaften in weiten Grenzen variiert werden. Die E-lastomereigenschaften im Gebrauchstemperaturbereich sind Folge der mikroskopischen Phasentrennung von Hartsegmentdomänen, aufgebaut aus Diisocyanat und Kettenverlängerer, sowie der Polyolmatrix. Zum Erreichen ausreichend hoher Molekulargewichte wird vorteilhaft ein Verhältnis von NCO-Gruppen zu Zerewitinoff aktiven Wasserstoffatomen von ungefähr 1 : 1 gewählt. Um Minderfunktionalitäten, z.B. als Folge der Wasserreaktion von NCO-Gruppen, auszugleichen, kann ggf. auch ein leichter NCO-Überschuss eingestellt werden. In manchen Fällen werden jedoch auch kleine Mengen monofunktioneller Komponenten mitverwendet, um das Molekulargewicht und damit die Viskosität der Schmelze zu begrenzen.

Obwohl in der Literatur über TPUs meist NCO / OH-Verhältnisse von 0,9 bis 1,2 erwähnt sind, liegen die Verhältnisse von NCO-Gruppen zu Zerewitinoff aktiven Wasserstoffatomen in konkreten Rezepturen in der Regel nicht über 1,05. 1,08 ist die Ausnahme und wird allenfalls bei Mitverwendung von monofunktionellen Reaktionspartnern gewählt.

Auf Seiten der Diisocyanate finden hauptsächlich 4,4'-Diphenylmethandiisocyanat (MDI), 1,6-Hexamethylendiisocyanat (HDI) und 4,4'-Dicyclohexandiisocyanat (H₁₂-MDI) sowie 3,3'-Dimethyl-4,4'-biphenyldiisocyanat (TODI) Verwendung.

Auf Seiten der Polyole kommen sowohl Polyesterpolyole, bevorzugt Polyadipate und Polycaprolactone, als auch Polyetherpolyole, z.B. auf Basis von Tetrahydrofuran und Propylenoxid, zum Einsatz; in hochwertigen Anwendungen auch Polycarbonatpolyole. Darüber hinaus finden auch Gemische der genannten Polyole Verwendung.

Auf Seiten der Kettenverlänger werden überwiegend 1,4-Butandiol sowie Hydrochinon-bis(2-hydroxyethyl)ether(HQEE) verwendet.

Im Bereich der Gießelastomere werden besonders hochwertige Systeme unter Einsatz von NDI, welches als Rohstoff für TPUs bislang keine praktische Bedeutung erlangt hat, erhalten. Bei letzteren wird ein Optimum an Materialeigenschaften dann gefunden, wenn das Verhältnis von NCO-Gruppen zu Zerewitinoff aktiven Wasserstoffatomen ("NCO-Kennzahl") größer als 1,10 : 1 gewählt wird.

Das überschüssige NCO reagiert dabei nach und nach zu Allophanat- und ggf. Biuretgruppen ab, bildet somit verzweigt oder vernetzt aufgebaute Polyurethanwerkstoffe, die nicht thermoplastisch verarbeitbar sind.

Es hat nicht an Versuchen gefehlt, die NDI-basierten, nur in Gießanwendungen realisierten vorteilhaften Materialeigenschaften, wie z.B. günstige Abriebwerte, geringe Druckverformungsreste (DVR), insbesondere auch die hervorragenden Materialeigenschaften bei hohen Gebrauchstemperaturen im Bereich von beispielsweise 70 bis 100°C nicht nur durch die Gießtechnik, sondern auch durch thermoplastische Verarbeitung zu realisieren.

Die thermoplastische Verarbeitung von Polyurethanen (PUR) hat gegenüber der Gießtechnik zum Beispiel den Vorteil, dass bei der Herstellung technischer Teile vorgefertigtes Halbzeug, also z. B. TPU-Granulat, lediglich umgeformt werden muss und keine deutlich schwieriger zu handhabenden chemischen Reaktionen mehr ausgeführt werden müssen. Andererseits bedeutet thermoplastische Verarbeitung aber auch, dass der chemische Aufbau der TPU-Materialien weitestgehend linear sein muss, wohingegen Gießelastomere auch verzweigt bzw. vernetzt sein können. Diese Unterschiede im molekularen Aufbau wirken sich auf die Materialeigenschaften aus; beispielsweise ist das Quellungsverhalten bei ansonsten gleich aufgebauten Systemen für chemisch verzweigte PUR-Gießelastomere stets besser als das von TPUs.

Generell gesprochen ergänzen sich PUR-Gießelastomere und TPUs in an sich idealer Weise und man wird stets diejenige Herstellungsvariante wählen, die zu einer optimalen Kombination von Produkteigenschaften einerseits und möglichst einfacher, d.h. kostengünstiger Herstellung andererseits führt.

Die Freiheit in der Wahl der Herstellungsvariante von PUR-Materialien setzt voraus, dass auf NDI-basierte PUR sowohl in der einen als auch in der anderen Variante überhaupt zur Verfügung stehen.

In der wirtschaftlichen Praxis existieren auf NDI-basierte PUR jedoch ausschließlich in der Variante von Gießelastomeren, nicht jedoch als TPUs. Dies ist ein Indiz dafür, dass trotz des vergleichsweise sehr aufwendigen Herstellverfahrens von Gießelstomeren auf Basis NDI (1,5-Naphthalindiisocyanat, z. B. Desmodur® 15 von Bayer MaterialScience AG) bislang keine vergleichbaren TPUs hergestellt werden konnten, also auf die Verarbeitungsvorteile verzichtet werden musste.

EP-A 0 615 989 beschreibt, dass die an sich unvereinbaren Zielgrößen einer NCO-Kennzahl von größer als 1,10 und thermoplastische Verarbeitbarkeit kombiniert werden können, indem man das PUR-Granulat vor der thermoplastischen Umarbeitung einer Temperaturbehandlung unterzieht.

Diese Temperaturbehandlung ist technisch aufwendig und hat sich in der industriellen Praxis nicht durchsetzen können.

Andere Lösungsansätze, NDI-basierte TPUs herzustellen, sind beispielsweise die Herstellung eines NDI-Prepolymeren auf einer Reaktionsschnecke und anschließende sofortige Umsetzung mit dem Kettenverlängerer zum TPU-Granulat. Hierdurch wird die Problematik des NCO-Überschusses nicht gelöst; erschwerend kommen noch prozesstechnische Aspekte hinzu. Beispielsweise bedingt das in Schuppenform vorliegende NDI eine vergleichsweise aufwendige kontinuierliche Feststoffdosierung, um sicherzustellen, dass das kontinuierlich herzustellende NCO-Prepolymer auch im kurzen Zeitmaßstab konstant bezüglich seines NCO-Wertes bzw. seiner Zusammensetzung ist. Des Weiteren bedingen arbeitshygienische Aspekte, die sich aus der vergleichsweise hohen Sublimationstendenz von NDI ergeben, einen erhöhten technischen Aufwand.

Einen Ausweg aus dieser Problematik eröffnet ein Weg über ein vorzufertigendes NDI-Prepolymer, welches homogen bezüglich seines Aufbaus sein müsste. Aus der Gruppe der NDI-Prepolymere sind allerdings nur solche brauchbar, die über eine ausreichende Lagerstabilität verfügen. Klassische NDI-Prepolymere, wie sie in großem Maßstab zur Herstellung von NDI-Gießelastomeren verwendet werden, sind dadurch gekennzeichnet, dass das nicht umgesetzte monomere NDI aufgrund seiner Schwerlöslichkeit und des hohen Schmelzpunktes bei Lagerbedingungen, z.B. bei Temperaturen unterhalb 50°C, ausfällt. Einfaches Erwärmen auf Temperaturen oberhalb des Schmelzpunktes von NDI (127°C) ist jedoch aus folgenden Gründen nicht zielführend: Die mit dem Aufschmelzvorgang verbundene hohe Temperaturbelastung führt zu Nebenreaktionen und letztlich zu einem Abfall der NCO-Kennzahl, verbunden mit einem Anstieg der Viskosität, so dass eine einfache Verarbeitung mindestens erschwert, wenn nicht unmöglich wird. Problematisch ist hierbei besonders, dass sich das Verhältnis von NCO-Gruppen zu Zerewitinoff aktiven Wasserstoffatomen ("NCO-Kennzahl") sehr stark ändert, was zu uneinheitlichen Verbindungen führt. Gerade bei niedrigen NCO-Gehalten von NDI-Prepolymeren (2,5 - 6 Gew.% NCO), mit denen nichtsdestotrotz der technisch relevante Härtebereich von PU-Elastomeren abgedeckt werden kann, hat eine Abweichung sehr starken Einfluss auf die Kennzahl und somit letztlich auf die Verarbeitungs- und Materialeigenschaften. Ebensowenig stellt das Lagern eines NDI-Prepolymeren bei hoher Temperatur, z.B. oberhalb 120°C, eine gangbare Lösung dar, weil unter diesen Bedingungen zwar das Auskristallisieren des freien monomeren NDI verhindert wird, jedoch Nebenreaktionen ebenfalls zu einem raschen Viskositätsanstieg führen und darüber hinaus auch die Eigenschaften von daraus hergestellten Gießelastomeren sich dramatisch verschlechtern.

Die vorgenannte Problematik von konventionellen, nicht lagerstabilen NDI-Prepolymeren ist der Hintergrund von Verarbeitungsempfehlungen, die die Kettenverlängerungsreaktion innerhalb von 30 Minuten nach Herstellung des NDI-Prepolymeren vorschreiben bzw. von Beschreibungen in der Literatur, die die Lagerfähigkeit von NDI-Prepolymeren ganz generell in Zweifel ziehen: So heißt es in "Solid Polyurethane Elastomers, P.Wright und A.P.C. Cummings, Maclaren and Sons, London 1969, S. 104 ff. im Kapitel 6.2. wie folgt:

### "6.2.1. Unstable Prepolymer Systems (Vulkollan) (Vulkollan^{®}; Handelsname für Gießelastomersysteme auf Basis Naphthalindiisocyanat (NDI) der Bayer MaterialScience AG).

Vulkollan is manufactured by a prepolymer route, although the prepolymer is non-storable and must be further reacted within a short interval of time. The prepolymer so formed is relatively unstable since further undesirable side reactions can take place. To reduce the possibility of these side reactions occurring, the next stage in the process, viz. the chain extension, should take place as soon as possible but within a maximum of 30 minutes."

Diese Ausführungen machen auch deutlich, warum TPUs auf Basis NDI im Markt nicht zur Verfügung stehen.

Aufgabe war es daher, TPUs mit den von NDI-Gießelastomeren bekannten vorteilhaften Materialeigenschaften zur Verfügung zu stellen sowie ein technisch vorteilhaftes, durchführbares Verfahren zu ihrer Herstellung.

Überraschenderweise wurde gefunden, dass thermoplastische Polyurethane (TPU) auf Basis NDI hergestellt werden können, indem man spezielle, lagerstabile NDI-basierte NCO-Prepolymere mit Kettenverlängerern umsetzt, die weitgehend ausreagierte und abgekühlte Reaktionsschmelze granuliert. Das TPU-Granulat kann anschließend zu Formkörpern verarbeitet werden.

Gegenstand der vorliegenden Erfindung ist daher ein Verfahren zur Herstellung von thermoplastischen Polyurethanen auf Basis 1,5-Naphthalindiisocyanat (NDI), dadurch gekennzeichnet, dass
a) 1,5-Naphthalindiisocyanat (NDI) mit
b) Polyolen mit einer Temperatur von 80°C bis 240°C, mit einem zahlenmittleren Molekulargewicht von 850 bis 3000 g/mol, bevorzugt von 1000 bis 3000 g/mol, mit bei 75°C gemessenen Viskositäten von < 1500 mPas und einer Funktionalität von 1,95 bis 2,15 aus der Gruppe bestehend aus Polyesterpolyolen, Poly-ε-caprolactonpolyolen, Polycarbonatpolyolen, Polyetherpolyolen und α-Hydro-ω̅-hydroxy-poly(oxytetramethylen)polyolen in einem Verhältnis von NCO- zu OH-Gruppen von 1,55:1 bis 2,35:1 kontinuierlich oder diskontinuierlich umgesetzt wird,
c) gegebenenfalls in Gegenwart von Hilfs- und Zusatzstoffen,
   und nach der Umsetzung so abgekühlt wird, dass die Verweilzeit im
   A) Temperaturbereich vom Reaktionsende bis 130°C den Wert von 1/2 Std. und
   B) im Temperaturbereich vom Reaktionsende bis 110°C den Wert von 1,5 Std. und
   C) im Temperaturbereich vom Reaktionsende bis 90°C den Wert von 7,5 Std. und
   D) im Temperaturbereich vom Reaktionsende bis 70°C den Wert von 72 Std.
   jeweils nicht überschritten wird und
   wobei das nach der Umsetzungsreaktion noch vorhandene nicht reagierte NDI nicht entfernt wird,
d) das so erhaltene lagerstabile NCO-Prepolymer mit einem NCO-Gehalt von 2,5 bis 6 Gew.-% und mit bei 100°C gemessenen Viskositäten von < 5000 mPas mit Kettenverlängerern umgesetzt wird, wobei die Kennzahl (Verhältnis von NCO-Gruppen zu OH-Gruppen aus Polyol b) und Zerewitinoff aktiven Wasserstoffatomen aus Kettenverlängerer d)) 0,95:1 bis 1,10:1 beträgt,
e) das so erhaltene thermoplastische Polyurethan (TPU) abgekühlt und granuliert wird.

Wenn das nicht reagierte NDI erfindungsgemäß nicht entfernt wird, dann liegt es in Mengen von mehr als 0,3 Gew.-% und weniger als 5 Gew.-%, bezogen auf das Prepolymer, vor.

Bevorzugt werden als Kettenverlängerer Verbindungen aus der Gruppe bestehend aus Ethylenglykol, 1,3-Propandiol, 1,4-Butandiol, 2,3-Butandiol, 1,5-Pentandiol, 1,6-Hexandiol und HQEE verwendet.

Bevorzugt liegt das Verhältnis von NCO-Gruppen zu Zerewitinoff aktiven Gruppen im TPU im Bereich von 0,98 bis 1,05 und die Härten des TPU im Bereich von 70 Shore A bis 70 Shore D, bevorzugt von 80 Shore A bis 70 Shore D und die bei 70°C gemessenen Werte für den Druckverformungsrest sind kleiner als 30% und das Verhältnis der E'-Moduli, gemessen bei 0°C und bei 130°C ist, kleiner als 2, bevorzugt kleiner als 1,6, besonders bevorzugt kleiner als 1,5.

Lagerstabile NCO-Prepolymere auf Basis 1,5-Naphthalindiisocyanat (NDI) sind solche mit einem NCO-Gehalt von 2,5 bis 6 Gew.-% und mit einer bei 100°C gemessenen Viskosität von < 5000 mPas, die durch Umsetzung von
a) 1,5-Naphthalindiisocyanat (NDI) mit
b) Polyolen mit einem zahlenmittleren Molekulargewicht von 850 bis 3000 g/mol, bevorzugt von 900 bis 3000 g/mol, besonders bevorzugt von 1000 bis 3000 g/mol, mit bei 75°C gemessenen Viskositäten von < 1500 mPas und einer Funktionalität von 1,95 bis 2,15 aus der Gruppe bestehend aus Polyesterpolyolen, Poly-ε-caprolactonpolyolen, Polycarbonatpolyolen, Polyetherpolyolen und α-Hydro-ω̅-hydroxy-poly(oxytetramethylen)polyolen in einem Verhältnis von NCO- zu OH-Gruppen von 1,55:1 bis 2,35:1, bevorzugt 1,60:1 bis 2,15:1, besonders bevorzugt 1,70:1 bis 2,00:1, bei einer Temperatur von 80°C bis 150°C kontinuierlich oder diskontinuierlich hergestellt werden,
c) wobei Hilfs- und Zusatzstoffe verwendet werden können,
und nach der Umsetzung entsprechend dem beschriebenen Abkühlvorgang rasch abgekühlt werden.

Die unter b) genannten Polyesterpolyole werden entsprechend dem Stand der Technik zumeist durch Polykondensation einer oder mehrerer Polycarbonsäuren, ggf. Polycarbonsäurederivat mit molar überschüssigem kurzkettigen Polyol, ggf. Polyolgemischen hergestellt, wobei auch Katalysatoren verwendet werden können. Typische kurzkettige Polyole sind Alkylendiole mit 2 bis 12 C-Atomen. Poly-ε-caprolactonpolyole werden durch ringöffnende Polymerisation von ε-Caprolacton unter Einsatz von überwiegend bifunktionellen Startermolekülen, einschließlich Wasser erhalten. Polycarbonatpolyole sind Hydroxylendgruppen aufweisende und im Mittel mindestens 3 Carbonatgruppen enthaltende Verbindungen, die auf die dem Fachmann bekannten Synthesewegen z.B. durch Polykondensation von z.B. Phosgen, Diphenylcarbonat oder Dimethylcarbonat mit mindestens einem Alkylendiol mit 2 bis 12, bevorzugt 4 bis 12 C-Atomen erhalten werden. Polyetherpolyole sind überwiegend mit bifunktionellen Startern polymerisierte Polypropylen- oder Polypropylen-co-ethylenoxide, die z.B. unter Katalyse von Alkalihydroxiden oder Doppelmetallkomplexen erhalten werden. α-Hydro-ω̅-hydroxy-poly(oxytetramethylen) Polyole werden durch ringöffnende Polymerisation von Tetrahydrofuran mit Hilfe stark saurer Katalysatoren erhalten.

Die Herstellung der NDI-Prepolymere erfolgt, indem das Polyol auf eine Temperatur von 80 bis 150°C erwärmt und mit NDI verrührt wird. Die genaue Starttemperatur für die Prepolymerbildung hängt hierbei von der Größe des Ansatzes sowie der Art des Gefäßes ab und wird in Vorversuchen so bestimmt, dass infolge der Exothermie der Reaktion ein Temperaturmaximum erreicht wird, welches ausreicht, um das eingesetzte NDI im Reaktionsgemisch aufzuschmelzen bzw. eine klare homogene Schmelze zu erhalten. Bei Verwendung von 1,5-NDI liegt das erforderliche Temperaturmaximum etwa im Bereich von 120 bis 135°C, besonders bevorzugt 125 - 130°C. Nach Erreichen einer klaren, homogenen Schmelze (Ende der Reaktion) kann das erhaltene NCO-Prepolymere direkt weiter umgesetzt werden, oder vorteilhaft zum Zwecke einer späteren Weiterverabeitung rasch auf unter 70°C abgekühlt, in Lager- bzw. Transportgefäße abgefüllt und dann bei Raumtemperatur bis zur weiteren Verwendung gelagert werden. Rasche Abkühlung (von der Temperatur bei Reaktionsende) auf unter 70°C bedeutet im Zusammenhang mit dem erfindungsgemäßen Verfahren folgendes:
A) Max. Verweilzeit von ½ Std. im Temperaturbereich vom Reaktionsende bis zu einer Temperatur von 130°C und
B) Max. Verweilzeit von 1,5 Std. im Temperaturbereich vom Reaktionsende bis zu einer Temperatur von 110°C und
C) Max. Verweilzeit von 7,5 Std. im Temperaturbereich vom Reaktionsende bis zu einer Temperatur von 90°C und
D) Max. Verweilzeit von 72 Std. im Temperaturbereich vom Reaktionsende bis zu einer Temperatur von unter 70°C.

Die Einhaltung dieser Vorgaben ist selbstverständlich technisch umso einfacher zu bewerkstelligen, je kleiner die rasch abzukühlende Menge an NCO-Prepolymeren ist. Im Labormaßstab, d.h. bei Mengen von bis ca. 10 kg genügt hierzu u. U. die Kühlung mit Luft, ggf. flüssigen Medien, wie z. B. Wasser- oder Ölbädern, während im technischen Maßstab, d.h. bei Mengen von z. B. 100 kg oder 5 Tonnen sowohl effektive Wärmeaustauschersysteme als auch die meist weniger kostenintensive Variante des Ablassens des heißen Reaktionsproduktes in älteres, bereits abgekühltes Material unter intensivem Rühren oder Umpumpen in Betracht kommt. Das bereits abgekühlte Material liegt hierbei in einem Rührkessel vor, wobei dessen Temperatur in Abhängigkeit von den Mengenverhältnissen von neuem zu altem Material so gewählt wird, dass die Temperatur des Gemisches nach Ende des Ablassschrittes höchstens 100°C beträgt. Der Ablassvorgang an sich muss hierbei so gestaltet werden, dass für alle Anteile an altem und neuem Produkt alle Randbedingungen bzgl. der Abkühlgeschwindigkeit eingehalten werden können. Das so erhaltene, auf Temperaturen von höchstens 100°C abgeschreckte Gemisch aus altem und neuem Produktanteil wird danach ggf. durch Kühlung des Kessels auf Temperaturen von unter 70°C weiter abgekühlt. In dieser Phase des Prozesses wird parallel der Abfüllvorgang in Lagerbehälter bis zu einem Ausmaß betrieben, welches sowohl sicherstellt, dass genügend Produkt im Ablassbehälter bei einer Temperatur verbleibt, die es erlaubt, das Abschrecken der nächsten Teilcharge auf die o. g. Temperatur sicherzustellen, als auch die Temperaturbelastung insgesamt zu minimieren.

Zur Herstellung größerer Mengen ist jedoch häufig günstiger, d.h. einfacher und preiswerter, die Herstellung nicht in diskontinuierlicher Fahrweise in Reaktionskesseln, sondern in kontinuierlicher Fahrweise mittels Reaktionsextrudern vorzunehmen.

Die Herstellung von NCO-Prepolymeren auf Reaktionsextrudern ist an sich bekannt. Bei der Herstellung von thermoplastischen Polyurethanen wird das Extruderverfahren ebenfalls durchgeführt, wobei das NCO-Prepolymere als solches nicht isoliert wird, sondern im Reaktionsextruder direkt weiter zum thermoplastischen Polyurethan umgesetzt wird. So wird in DE-A 42 17 367 beschrieben, dass im wesentlichen lineare Polyesterpolyole mit Molmassen von 500 bis 5000 g/mol mit Diisocyanaten im NCO-/OH-Verhältnis von 1,1:1 bis 5,0:1 zu NCO-Prepolymeren umgesetzt werden.

Eine weitere Variante des erfindungsgemäßen Verfahrens ist es daher, das Verfahren zur Herstellung der lagerstabilen NCO-Prepolymere kontinuierlich auf Reaktionsextrudern durchzuführen. Das Reaktionsgemisch aus Polyol und NDI wird in einer der ersten Zonen des Extruders auf Temperaturen von mindestens 180°C bis höchstens 240°C erhitzt und in den nachfolgenden Zonen des Extruders unter Anlegen eines Unterdruckes zur weitgehenden Entgasung und mittels Kühlung rasch auf Temperaturen von vorzugsweise unter 100°C, besonders bevorzugt unter 80°C abgekühlt. Die erhaltene Schmelze wird in mit Inertgas befüllte Gefäße abgefüllt und gelagert. Der Zwischenschritt des Sammelns und Lagern des auf einem Extruder hergestellten NDI-Prepolymeren umgeht selbstverständlich auch die o.g. Problematik einer Feststoffdosierung des NDI, da Mengenschwankungen auf einer kurzen Zeitachse sich hierdurch nicht direkt in Schwankungen der Kennzahl des TPUs übertragen, sondern ein homogenes NCO-Prepolymer erhalten wird, welche erst später zum TPU weiterverarbeitet wird.

Bei Einsatz der Extrudervariante gibt man zweckmäßigerweise ein Alterungsschutzmittel in das Polyolgemisch.

Die weiter oben definierten Bedingungen für den Abkühlvorgang sind bei Einsatz eines Reaktionsextruders selbstverständlich relativ problemlos einzuhalten, indem neben der Einstellung der Temperaturen in den einzelnen Heiz- und Kühlzonen auch der Durchsatz entsprechend gewählt wird.

Die Polyole, die zur Herstellung der NCO-Prepolymeren verwendet werden, werden vorzugsweise vor ihrem Einsatz in einem Vorratsgefäß bei erhöhter Temperatur gelagert. Als vorteilhaft hat sich hierbei die Lagerung der Polyesterpolyole im Temperaturbereich von 100 bis 140°C und die Lagerung der Polyetherpolyole bei Temperaturen von 80 bis 120°C erwiesen.

Die lagerstabilen NDI-Prepolymere haben des Weiteren den Vorteil, dass die nach der Umsetzungsreaktion noch vorhandenen nicht reagierten aromatischen Diisocyanate nicht entfernt werden und in Mengen von mehr als 0,3 Gew.-% und weniger als 5 Gew.-%, bezogen auf das Prepolymer, vorliegen.

Die TPU werden hergestellt, indem man die lagerstabilen NDI-Prepolymere, die im Kesselverfahren oder im Extruderverfahren hergestellt und gelagert wurden, zunächst auf Temperaturen von mindestens 60°C erwärmt und sie dadurch in einen für die Verarbeitung günstigen Viskositätsbereich überführt. Anschließend werden die lagerstabilen NDI-Prepolymere in Form einer klaren homogenen Schmelze unter Verwendung eines Mischaggregates, wie z.B. eines Rührers, Mischkopfes oder Reaktionsextruders mit Kettenverlängerern, bevorzugt Hydroxylgruppen aufweisenden Kettenverlängerern, ggf. Kettenverlängerergemischen mit mittleren Funktionalitäten von 1,9 bis 2,2 und Molekulargewichten bzw. zahlenmittleren Molekulargewichten von 62 bis 400 g/mol umgesetzt.

Hydroxylgruppen aufweisende Kettenlängerer zur Herstellung von TPUs weisen 2 bis 12 C-Atome auf. Besonders bevorzugt sind: Ethylenglykol, 1,3-Propandiol, 1,4-Butandiol, 2,3-Butandiol, 1,5-Pentandiol, 1,6-Hexandiol und HQEE (Hydrochinon-di(β-hydroxyethyl)ether).

Hierbei wird das Verhältnis NCO-Gruppen der NDI-Prepolymeren zu Zerewittinoff aktiven H-Atomen im Bereich von 0,95:1 bis 1,10:1, bevorzugt von 0,95:1 bis 1,05:1, besonders bevorzugt von 0,98:1 bis 1,05:1 gewählt, wobei als NCO-Gehalt der aufgrund der Stöchiometrie zu erwartende theoretische NCO-Gehalt als Berechnungsgrundlage zu Grunde gelegt wird.

Die Kettenverlängerungsreaktion kann selbstverständlich in Gegenwart von Hilfs- und Zusatzstoffen, wie z.B. Trennmitteln, Antioxidantien, Hydrolyseschutzmitteln, z. B. Carbodiimide, UV-Schutzmittel, wie z. B. 2,6-Dibutyl-4-methylphenol, Flammschutzmittel, Füllstoffen und Katalysatoren erfolgen. Eine Übersicht ist z. B. in G. Oertel, Polyurethane Handbook, 2nd edition, Carl Hanser Verlag, München, 1994, Kap. 3.4 enthalten.

Im technischen Maßstab wird das TPU im Falle der Verwendung eines Reaktionsextruders zunächst in Form eines Stranges erhalten, welcher normalerweise direkt nach Verlassen des Reaktionsextruders z.B. mittels Wasser abgekühlt und dann granuliert wird. Alternativ können die Reaktanden auch in Statikmischern, Mischköpfen etc. zur Reaktion gebracht werden und die Reaktionsschmelze auf Bänder oder Bleche ausgetragen und anschließend zerkleinert werden.

So erhaltenes TPU-Granulat wird ggf. nach Lagerung und vorheriger Trocknung auf einer Spritzgussmaschine zu technischen Teilen thermoplastisch umgeformt, wobei die Spritzkörper durch Nachbehandlung bei erhöhter Temperatur (Tempern) ihre endgültigen Eigenschaften annehmen.

Die TPUs zeichnen sich dadurch aus, dass sie bzgl. des Spannungs- und Dehnungverhaltens und bzgl. der thermischen Eigenschaften mit analogen Gießelastomeren auf gleichem Niveau liegen.

Weiterhin liegen die DVR-Werte (Druckverformungsrest) (DVR 70°C/24 Std.) bei einer Elastomerhärte von beispielsweise ca. 95 Shore A bei ca. 16 - 24%, wohingegen auf MDI basierte, konventionelle TPUs gleicher Härte typischerweise Werte oberhalb von 35% aufweisen.

Selbst bei den bei 120°C (24 Std.) bestimmten DVR-Werten zeigen die nach dem erfindungsgemäßen Verfahren hergestellten TPUs Werte unterhalb 50%, wohingegen härtegleiche TPU auf MDI-Basis unter diesen Bedingungen Kriecherscheinungen zeigen.

Die TPUs zeichnen sich weiterhin dadurch aus, dass der komplexe E'-Modul im Gebrauchstemperaturbereich weitgehend temperaturunabhängig ist, d.h. dass das Verhältnis des bei 0°C und des bei 130°C gemessenen Wertes kleiner als 2, bevorzugt kleiner als 1,6, besonders bevorzugt kleiner als 1,5 ist.

Darüber hinaus sind die erfindungsgemäßen, auf NDI-basierten TPUs exzellent verarbeitbar, d.h. sie erfordern keine für TPU ungewöhnlichen Verarbeitungsbedingungen, wie sehr hohe Masse-Temperaturen oder Drücke, und zeigen bei längerer Standzeit im Zylinder der Spritzgießmaschine keine Anzeichen von Vernetzung.

Die Erfindung soll anhand der nachfolgenden Beispiele näher erläutert werden.

### Beispiele

### Verwendete Ausgangsverbindugen

Polybutylenadipat, OH-Zahl (OHZ) 50, hergestellt aus Adipinsäure und Butandiol
Polybutylenadipat, OHZ 120, hergestellt aus Adipinsäure und Butandiol
neo-Pentylglykol gestartetes Poly-ε-Caprolacton mit einer Hydroxylzahl von 70 mgKOH/g
1,6-Hexandiol
Desmodur^{®} 44 M (4,4'-Diphenylmethandiisocyanat) der Fa. Bayer MaterialScience AG
Hydrochinon-di(β-hydroxyethyl)ether (HQEE), Vernetzer 30/10 der Fa. Rheinchemie
Anox^{®} 20 AM der Fa. Great Lakes
Loxamid^{®} EBS der Fa. Cognis
Irganox^{®} 1010 der Fa. Ciba
Desmodur^{®} 15 (Naphthalindiisocyanat) der Fa. Bayer MaterialScience AG

### Beispiel 1: Herstellung eines NDI-basierten, lagerstabilen NCO-Prepolymeren (erfindungsgemäß)

100 Gew.-Tle. eines neo-Pentylglykol gestarteten Poly-ε-Caprolacton mit einer Hydroxylzahl von 70 mgKOH/g wurden entwässert und bei 118°C mit 26,03 Gew.-Tle. Desmodur^{®} 15 verrührt. Die Reaktionstemperatur erhöhte sich nach 11 Minuten auf 129°C. Es wurde in 10 min. auf 65°C abgekühlt. Das Prepolymer wurde in mehrere Proben aufgeteilt und die Proben nach unterschiedlicher Lagerzeit untersucht und die Viskosität (gemessen bei 120°C), das Aussehen (beurteilt bei einer Temperatur von 50°C) und der NCO-Wert bestimmt (siehe Tabelle 1).

**Tabelle 1: Lagerungsbedingungen und Eigenschaften des Prepolymeren**

| **Prepolymer Nr.** | **Lagertemperatur** | **Zeit** | **Viskosität** | **NCO-Wert** | **Aussehen** |
|---|---|---|---|---|---|
| | [°C] | [Std] | [mPas] bei T | [Gew-% NCO] | [bei 50°C] |
| 1.1 | 65 | 16 | 1320 bei 120°C | 3,9 | klar |
| 1.2 | 80 | 48 | 1440 bei 120°C | 3,8 | klar |
| 1.3 | 100 | 24 | 1920 bei 120°C | 3,6 | klar |
| 1.4 | 23 | 1000 | 1320 bei 120°C | 3,9 | klar |
| 1.5 | 23 | 0 | 1320 bei 120°C | 3,9 | klar |

Die in Tabelle 1 gewählten Lagerbedingungen decken unterschiedliche denkbare Temperaturbelastungen ab, denen das Prepolymer nach seiner Herstellung unterworfen sein könnte. So simuliert etwa"16 Std. bei 65°C" (Prepolymer 1.1, Tabelle 1) den Abkühlvorgang, den das Prepolymer nach seiner Abfüllung in kleinere Gebinde, z. B. 60-1-Kannen, im ungünstigsten Fall ausgesetzt sein könnte. "48 Std. bei 80°C" (Prepolymer 1.2, Tabelle 1) und "24 Std. bei 100°C" (Prepolymer 1.3, Tabelle 1) könnten Aufheizvorgänge vor einer Weiterverabeitung sein. "1000 Std. bei 23°C" (Prepolymer 1.4, Tabelle 1) ist eine Zeitspanne, die nach Herstellung bis zur Weiterverabeitung benötigt wird. Hier wird der gleiche Viskositätswert gefunden, wie zu Beginn der Raumtemperaturlagerung (Prepolymer 1.5, Tabelle 1). Somit ist sichergestellt, dass die erfindungsgemäß eingesetzten Prepolymere nach ihrer Herstellung, Lagerung und Überführung in einen verarbeitungsfähigen Zustand (Aufheizen) zur Herstellung von PUR-Elastomeren geeignet sind.

### Beispiel 2: Herstellung von erfindungsgemäß eingesetzten und nicht erfindungsgemäß verwendeten NCO-Prepolymeren

Die Prepolymere werden wie unter Beispiel 1 beschrieben hergestellt. Die Rezepturen und die Eigenschaften der Prepolymere sind Tabelle 2 zu entnehmen.

Beispielsweise wurde das Prepolymere 2.4 (Tab. 2) wie folgt hergestellt:
80 Gew.-Tle. eines neo-Pentylglykol gestarteten Poly-ε-Caprolacton mit einer Hydroxylzahl von 70 mg KOH/g wurden entwässert und bei 118°C mit 20,48 Gew.-Tle. Desmodur^{®} 15 verrührt. Die Reaktionstemperatur erhöhte sich nach 11 Minuten auf 129°C. Es wurde in 10 min. auf 65°C abgekühlt. Das Prepolymer wurde in mehrere Proben aufgeteilt und die Proben nach unterschiedlicher Lagerzeit (24 Std., 48 Std. und 1,5 Monate) bei unterschiedlichen Lagertemperaturen (Raumtemperatur, 80°C und 100°C) analysiert, wobei die Viskosität (gemessen bei 100 und 120°C), das Aussehen (beurteilt bei einer Temperatur von 23°C) und der NCO-Wert bestimmt wurden (siehe Tabelle 2).

**Tabelle 2: Herstellung von NCO-Prepolymeren und ihre Eigenschaften**

| **Rezeptur:** | | **2.1 V** | **2.2 V** | **2.3** | **2.4** | **2.5** | **2.6** | **2.7 V** |
|---|---|---|---|---|---|---|---|---|
| Poly-ε-caprolacton^{*)} | [Gew.-Tle] | 80 | 80 | 80 | 80 | 80 | 80 | 80 |
| Desmodur^{®}15 | [Gew.-Tle] | 11,55 | 14,70 | 18,38 | 20,48 | 20,48 | 24,15 | 28,35 |
| Molverhältnis Desmodur^{®} 15/Poly-ε-caprolacton | | 1,1:1 | 1,4 : 1 | 1,75 : 1 | 1,95 : 1 | 1,95 : 1 | 2,3:1 | 2,7 : 1 |
| freies NDI (Theorie) | [Gew.-%] | 0,60 | 1,00 | 1,49 | 2,38 | 2,38 | 3,50 | 4,00 |
| Starttemp. Polyol | [°C] | 112 | 116 | 118 | 117 | 117 | 122 | 125 |
| Exotherm, Tₘₐₓ | [°C] | 129,5 | 128,1 | 129,5 | 127,6 | 127,3 | 125,9 | 125,7 |
| Reaktionszeit bis Tₘₐₓ | [min] | 16 | 13 | 17 | 11 | 16 | 12 | 12 |
| NCO, Theorie | [Gew.-%] | 0,46 | 1,77 | 3,20 | 3,98 | 3,98 | 5,24 | 6,58 |
| NCO, gefunden | [Gew.-%] | 0,28 | 1,58 | 2,95 | 3,66 | 3,72 | 5,03 | 6,32 |
| Viskosität^{**)} | [mPas@120°C] | >100000 | 8700 | 1650 | 1110 | 1050 | 625 | 435 |
| Viskosität^{**)} | [mPas@100°C] | >100000 | 18500 | 3100 | 2150 | 2050 | 1020 | 815 |

| **Viskosität nach** | | | | | | | | |
|---|---|---|---|---|---|---|---|---|
| 24h bei 100°C | [mPas@120°C] | n.b. | 15200 | 4550 | 2700 | 2600 | 1220 | 875 |
| 24h bei 100°C | [mPas@100°C] | n.b. | 38900 | 10400 | 4850 | 4700 | 2120 | 1700 |
| 48h bei 80°C | [mPas@120°C] | n.b. | 14700 | 2350 | 1350 | 1350 | 800 | 545 |
| 48h bei 80°C | [mPas@100°C] | n.b. | 35400 | 4700 | 2400 | 2430 | 1500 | 1035 |
| 1,5 Monate/Raumtemp. | [mPas@120°C] | n.b. | 10700 | 1900 | 1250 | 1100 | 700 | 540 |
| 1,5 Monate/Raumtemp. | [mPas@100°C] | n.b. | 23000 | 3700 | 2450 | 2250 | 1405 | 1114 |

| **NCO nach** | | | | | | | | |
|---|---|---|---|---|---|---|---|---|
| 24h bei 100°C | [Gew.-%] | n.b. | 1,38 | 2,63 | 3,37 | 3,32 | 4,54 | 5,79 |
| 48h bei 80°C | [Gew.-%] | n.b. | 1,47 | 2,78 | 3,56 | 3,59 | 4,72 | 5,97 |
| 1,5 Monate/Raumtemp. | [Gew.-%] | n.b. | 1,51 | 2,86 | 3,58 | 3,64 | 4,78 | 6,42 |

| **Aggregatzustand** | | | | | | | | |
|---|---|---|---|---|---|---|---|---|
| nach 1 Tag | | fest | trübe | klar | klar | klar | klar | trübe |
| nach 3 Tagen | | fest | trübe | klar | klar | klar | klar⁺⁾ | fest |
| nach 7 Tagen | | fest | trübe | trübe | klar | klar | klar⁺⁾ | fest |
| Stippen n. 1,5 Monaten | | fest | nein | nein | Ja | Ja | ja | ja |
| klar aufzuschmelzen bei | [°C] | | 50 | 50 | 60 | 50 | 85 | >95 |

| | | | | | | | | |
|---|---|---|---|---|---|---|---|---|
| ^{*)} neo-Pentylglykol gestartetes Poly-ε-Caprolacton mit einer Hydroxylzahl von 70 mgKOH/g ^{**)} Viskositätswerte wurden mit einem Haake-Viskosimeter bestimmt ⁺⁾ Klar, Spuren von festem NDI V Vergleich | | | | | | | | |

Die Beispiele der Tabelle 2 verdeutlichen, dass nur solche Prepolymere brauchbar sind, d.h. sowohl bzgl. ihres Aufschmelzverhaltens, als auch bzgl. ihrer Rheologie, insbesondere auch der Rheologie nach Lagerung, wenn die beanspruchten Molverhältnisse des Diisocyanates zum Polyol eingehalten werden (Rezepturen 2.3 bis 2.6, Tabelle 2).

### Beispiel 3:

Analog Beispiel 2 wurden 100 Gew.-Tle. eines neo-Pentylglykol gestarteten Poly-s-Caprolacton mit einer Hydroxylzahl von 70 mg KOH/g entwässert und bei 118°C mit 26,03 Gew.-Tle. Desmodur^{®} 15 verrührt. Die Reaktionstemperatur erhöhte sich nach 11 Minuten auf 130°C (Reaktionsende). Danach wurde der Ansatz in verschiedene Chargen geteilt, welche unterschiedlichen Temperaturen und Lagerzeiten ausgesetzt wurden. Die zum Erreichen der angegebenen Lagertemperatur notwendige Zeit bewegte sich, da die Mengen vergleichsweise klein waren, im Minutenbereich. Um Vergleichbarkeit der Messergebnisse herzustellen, wurde die Viskosität unabhängig von der zuvor eingestellten Lagertemperatur mit einem Viskosimeter "Physica MCR 51" der Fa. Anton Paar bei 100°C vorgenommen. Zur Messung des NCO-Gehaltes wurde jeweils die dem Fachmann bekannte Methode der Umsetzung mit überschüssigem Dibutylamin und dessen Rücktitration eingesetzt.

**Tabelle 3:**

| Versuch | Temperatur bei Herstellung | Abkühlzeit [min] | | | Lagertemperatur | Gesamtzeit bis Viskositätsmessung | Viskosität | NCO-Gehalt | Verweilzeit im Temperatursegment | | | | Erfüllt |
|---|---|---|---|---|---|---|---|---|---|---|---|---|---|
| | | auf | | | | | | | [Std.] | | | | Bedingung |
| | [°C] | 110°C | 90°C | 70°C | [°C] | [h] | [mPas] | [Gew.-%] | A) | B) | C) | D) | |
| 3-0 | 130 | | | | 130 | 0 | 1450 | 3,86 | | | | | |
| 3-1 (v) | 130 | | | | 130 | 0,5 | 1550 | 3,83 | 0,5 | | | | A) |
| 3-2 (v) | 130 | | | | 130 | 1 | 1790 | 3,77 | 1 | | | | keine |
| 3-3 (v) | 130 | | | | 130 | 2 | 2150 | 3,70 | 2 | | | | keine |
| 3-4 (v) | 130 | | | | 130 | 4 | 4660 | 3,44 | 4 | | | | keine |
| 3-5 (v) | 130 | 60 | | | 110 | 1 | 1640 | 3,82 | 0 | 1 | | | A) u. B) |
| 3-6 (v) | 130 | 60 | | | 110 | 2 | 1710 | 3,81 | 0 | 2 | | | A) |
| 3-7 (v) | 130 | 60 | | | 110 | 4 | 2050 | 3,74 | 0 | 4 | | | A) |
| 3-8 (v) | 130 | 60 | | | 110 | 24 | 4820 | 3,62 | 0 | 24 | | | A) |
| 3-9 (v) | 130 | 7 | 55 | | 90 | 1 | 1590 | 3,83 | 0 | 0,12 | 1 | | A), B) u. C) |
| 3-10 (v) | 130 | 7 | 55 | | 90 | 8 | 1680 | 3,79 | 0 | 0,12 | 8 | | A),B) |
| 3-11 (v) | 130 | 7 | 55 | | 90 | 24 | 1860 | 3,66 | 0 | 0,12 | 24 | | A), B) |
| 3-12 (v) | 130 | 7 | 55 | | 90 | 72 | 3230 | 3,43 | 0 | 0,12 | 72 | | A), B) |
| 3-13 erf. | 130 | 4 | 12 | 50 | 70 | 8 | 1440 | 3,83 | 0 | 0,07 | 0,2 | 8 | A), B), C) u. D) |
| 3-14 erf | 130 | 4 | 12 | 50 | 70 | 24 | 1560 | 3,80 | 0 | 0,07 | 0,2 | 24 | A), B), C) u. D) |
| 3-15 erf | 130 | 4 | 12 | 50 | 70 | 48 | 1640 | 3,74 | 0 | 0,07 | 0,2 | 48 | A), B), C) u. D) |
| 3-16 erf. | 130 | 4 | 12 | 50 | 70 | 72 | 1660 | 3,68 | 0 | 0,07 | 0,2 | 72 | A), B), C) u. D) |

| | | | | | | | | | | | | | |
|---|---|---|---|---|---|---|---|---|---|---|---|---|---|
| (v) = Vergleich erf. = erfindungsgemäß | | | | | | | | | | | | | |

Tabelle 3 zeigt, dass NCO-Prepolymere dann die niedrigste Viskosität aufweisen, d.h. am Besten weiterzuarbeiten sind, wenn möglichst rasch auf möglichst tiefe Temperaturen abgekühlt wird. In den Beispielen 3 - 13 bis 3 - 16 werden die max. Verweilzeiten eingehalten, und man erhält Prepolymere mit niedrigen Viskositäten.

Es ist also wichtig, dass alle 4 Randbedingungen eingehalten werden. Wird beispielsweise ein Prepolymer für 4 Std. bei 130°C gehalten (Versuch 3-4), weist es bereits eine Viskosität von 4660 mPas auf und der NCO-Gehalt hat sich bereits auf 3,44 Gew.-% abgebaut.

### Beispiel 4: Herstellung eines TPU-Granulates aus NDI-basiertem, lagerstabilen NCO-Prepolymeren (erfindungsgemäß)

Es wurden 100 Gew.-Tle. eines für ca. 45 Tage bei Raumtemperatur gelagerten NCO-Prepolymers (2.4. aus Beispiel 2) in einer Weißblechdose auf 100°C erwärmt und mit 3,98 Gew.-Tln. 1,4-Butandiol verrührt. Nach 190 Sekunden wurde die reagierende Schmelze auf Bleche gegossen. Nach dem Erkalten wurden die Gießplatten in Streifen geschnitten, granuliert und der weiteren Verarbeitung zugeführt.

Weitere Rezepturen sind in Tabelle 4 aufgeführt.

### Beispiel 5: Herstellung der TPU-Prüfkörper (erfindungsgemäß)

Das Granulat wurde 2 Stunden bei 80°C im Trockenlufttrockner getrocknet, um anhaftende Feuchtigkeit zu entfernen. Probekörper wurden auf einer Mannesmann D60-182 Spritzgießmaschine hergestellt, wobei folgendes Temperaturprofil Verwendung fand: Zone 1: 180°C, Zone 2: 200°C, Zone 3: 200°C, Zone 4 : 210°C. Die Massetemperatur betrug 217°C.

Die Probenkörper wurden für 12 bzw. 24 Std. bei 110°C getempert. Anschließend wurden S1-Stäbe ausgestanzt. Die Ergebnisse der mechanischen Untersuchungen sind ebenfalls in Tabelle 4 aufgerührt.

**Tabelle 4: Rezepturen, Herstellung und mechanische Eigenschaften von NDI-basierten TPUs**

| | **Beispiel** | | 4-1 | 4-2 | 4-3 | 4-4 | 4-5 | 4-6 | 4-7 |
|---|---|---|---|---|---|---|---|---|---|
| **Rezeptur:** | | | | | | | | | |
| | NCO Prepolymer aus Bspl. 2.4. | [Gew.-Tle.] | 100 | 100 | 100 | | | | 100 |
| | 1,4-Butandiol | [Gew.-Tle.] | 3,98 | 3,90 | 3,82 | | | | 3,76 |
| | Kennzahl*) | | 1.00 | 1.02 | 1.04 | | | | 1,06 |

| **Herstellung der Gießplatten:** | | | | | | | | | |
|---|---|---|---|---|---|---|---|---|---|
| | Prepolymertempera- | [°C] | 100 | 100 | 100 | | | | 100 |
| | Gießzeit | [sec] | 185 | 190 | 185 | | | | 185 |
| | Blechtemperatur | [°C] | 110 | 110 | 110 | | | | 110 |
| | Nachheizzeit | [h] | 24 | 24 | 24 | | | | 24 |
| | Nachheiztemperatur | [°C] | 110 | 110 | 110 | | | | 110 |

| **Thermoplastverarbeitung:** | | | | | | | | | |
|---|---|---|---|---|---|---|---|---|---|
| | Formtemperatur | [°C] | 20 | 20 | 20 | 20 | 80 | 80 | 20 |

| **Nachbehandlung der verspritzten NDI-basierten TPUs:** | | | | | | | | | |
|---|---|---|---|---|---|---|---|---|---|
| | Nachheizzeit | [h] | 12 | 12 | 12 | 24 | 12 | 24 | 12 |
| | Nachheiztemperatur | [°C] | 110 | 110 | 110 | 110 | 110 | 110 | 110 |
| | | | | | | | | | |

| **Mechanische Eigenschaften der NDI-TPUs:** | | | | | | | | | |
|---|---|---|---|---|---|---|---|---|---|
| DIN 53505 | Shore A | | 94 | 95 | 94 | 94 | 94 | 94 | 94 |
| DIN 53505 | Shore D | | 48 | 48 | 48 | 47 | 47 | 48 | 47 |
| DIN 53504**) | Anfangsmodul | [N/mm²] | 95,8 | 96,7 | 88,3 | 97,5 | 85,8 | 89,2 | 91,5 |
| DIN 53504**) | Spannung 100% | [MPa] | 14,8 | 14,3 | 14,5 | 14,5 | 14,1 | 14,4 | 14,2 |
| DIN 53504**) | Spannung 300% | [MPa] | 21,4 | 20,8 | 21,8 | 21,7 | 21,4 | 21,5 | 20,9 |
| DIN 53504**) | Reißspannung | [MPa] | 71,9 | 66,5 | 64,3 | 69,5 | 66,3 | 75,6 | 71,7 |
| DIN 53504***) | Reißspannung | [MPa] | 43,8 | 44,6 | 49,4 | | | | 50,8 |
| DIN 53504**) | Reißdehnung | [%] | 688 | 655 | 622 | 649 | 640 | 685 | 678 |
| DIN 53504***) | Reißdehnung | [%] | 727 | 710 | 689 | | | | 694 |
| DIN 53515 | Graves | [kN/m] | 106 | 103 | 101 | 103 | 101 | 103 | 98 |
| | Stoßelastizität | [%] | | | | | | 65 | |
| DIN 53516 | Abrieb (DIN) | [mm³] | 28 | 28 | 28 | | 26 | 24 | 29 |
| DIN 53420 | Dichte | [g/mm³] | 1,16 | 1,16 | 1,16 | | 1,16 | 1,16 | 1,16 |
| DIN 53517 | DVR 22°C/72 Std. | [%] | 13 | 16 | 14 | | 10 | 12 | 11 |
| DIN 53517 | DVR 70°C/24 Std. | [%] | 17 | 19 | 24 | | 17 | 19 | 19 |
| DIN 53517 | DVR 100°C/24 Std. | [%] | 24 | | 24 | | 26 | 26 | 26 |
| DIN 53517 | DVR 120°C/24 Std. | [%] | 40 | | | | | 42 | 47 |
| Elastizitätsmodul E' (0°C) | | [MPa] | 108 | 117 | | 106 | | 87,9 | 94,9 |
| Elastizitätsmodul E' (130°C) | | [MPa] | 81,6 | 89,9 | | 81,2 | | 68 | 75,3 |
| Verhältn. E'(0°C)/E'(130°C) | | | 1,32 | 1,30 | | 1,30 | | 1,29 | 1,26 |

| | | | | | | | | | |
|---|---|---|---|---|---|---|---|---|---|
| *): Kennzahl bezieht sich auf den gefundenen NCO-Wert des Präpolymeren aus Bspl. 2.4 **): Zuggeschwindigkeit: 200 mm/min ***): Zuggeschwindigkeit: 500 mm/min | | | | | | | | | |

Tabelle 4 verdeutlicht anhand von 4 verschiedenen Rezepturen, die sich im Wesentlichen in der eingestellten Kennzahl (1,00 bis 1,06) unterscheiden, dass für den Elastomerhärtebereich von ca. 94 bis 95 Shore A fast eigenschaftsidentische Prüfkörper erhalten werden. So liegen beispielsweise die DVR-Werte (70°C/24 Std.) im Bereich von 17 - 24%, steigen auf 24 - 26% (100°C/24 Std.) und können selbst bei 120°C mit Werten von 40 - 47 % noch bestimmt werden. Hier sind sie den typischen MDI-basierten Systemen mit ähnlichen Härten (siehe Tabelle 6) deutlich überlegen. Letzteres gilt auch z.B. bzgl. der Reißspannung. Charakteristisch für die erfindungsgemäßen TPUs der Tabelle 4 ist weiterhin die außerordentlich geringe Abhängigkeit des E'-Moduls von der Temperatur, die sich in ungewöhnlich niedrigen Verhältnissen des bei 0°C und des bei 130°C gemessenen Wertes niederschlägt und unterhalb von 1,5 liegt, während das MDI-System (Tab. 6) einen Wert von über 5 aufweist.

### Beispiel 6: Herstellung eines Gießelastomeren aus NDI-basiertem, lagerstabilem NCO-Prepolymeren (Vergleichsversuche)

100 Gew.-Tle. des für 45 Tage bei Raumtemperatur gelagerten NCO-Prepolymers aus Beispiel 2.4. wurden auf 100°C erwärmt und entgast. Dann wurden 0,1 Gew.-Tle. Irganox^{®} 1010 und 3,98 Gew.-Tle. 1,4-Butandiol eingerührt. Das Reaktionsgemisch wurde in auf 108°C bis 110°C vorgewärmte Formen gegossen, nach 18 Minuten entformt und im Umlufttrockenschrank für 16 Std. bei 110°C getempert. Die mechanischen Eigenschaften wurden bestimmt (siehe Tabelle 5).

Weitere Rezepturen sind in Tabelle 5 aufgeführt.

**Tabelle 5: Rezepturen, Herstellung und mechanische Eigenschaften von Gießelastomeren auf Basis NDI (Vergleich)**

| | **Beispiel** | | 6-1(V) | 6-2(V) | 6-3(V) | 6-4(V) | 6-5(V) |
|---|---|---|---|---|---|---|---|
| **Rezeptur:** | | | | | | | |
| | NCO Prepolymer aus Bspl. 2.4 | [Gew.-Tle.] | 100 | 100 | 100 | 100 | 100 |
| | Irganox^{®} 1010 | [Gew.-Tle] | 0,1 | 0,1 | 0,1 | 0,1 | 0,1 |
| | 1,4-Butandiol | [Gew.-Tle.] | 4,06 | 3,98 | 3,90 | 3,82 | 3,76 |
| | Kennzahl*) | | 0,995 | 1,015 | 1,036 | 1,057 | 1,074 |

| **Herstellung:** | | | | | | | |
|---|---|---|---|---|---|---|---|
| | Prepolymertemperatur | [°C] | 100 | 100 | 100 | 100 | 100 |
| | Gießzeit | [sec] | 180 | 190 | 195 | 190 | 190 |
| | Verfestigung | [min] | 10 | 10 | 10 | 10 | 10 |
| | Tischtemperatur | [°C] | 116 | 116 | 116 | 116 | 116 |
| | Formentemperatur | [°C] | 110 | 110 | 110 | 110 | 110 |
| | Nachheizzeit | [h] | 24 | 24 | 24 | 24 | 24 |
| | Nachheiztemperatur | [°C] | 110 | 110 | 110 | 110 | 110 |

| **Mechanische Eigenschaften:** | | | | | | | |
|---|---|---|---|---|---|---|---|
| DIN 53505 | Shore A | | | | | | |
| DIN 53505 | Shore D | | | | | | |
| DIN 53504 | Spannung 100%***) | [MPa] | 11,07 | 11,54 | 11,27 | 11,05 | 11,36 |
| DIN 53504 | Spannung 300%***) | [MPa] | 16,11 | 16,55 | 16,41 | 16,44 | 16,43 |
| DIN 53504 | Reißspannung***) | [MPa] | 31,55 | 30,28 | 32,21 | 32,32 | 36,28 |
| DIN 53504 | Reißdehnung***) | [%] | 539 | 510 | 517 | 501 | 543 |
| DIN 53515 | Graves | [kN/m] | 62 | 67 | 62 | 57 | 59 |
| | Stoßelastizität | [%] | | | | | |
| DIN 53516 | Abrieb (DIN) | [mm³] | | | | | |
| DIN 53420 | Dichte | [g/mm³] | | | | | |
| DIN 53517 | DVR 22°C/72 Std. | [%] | 21,6 | 19,7 | 18,9 | 19,0 | 18,2 |
| DIN 53517 | DVR 70°C/24 Std. | [%] | 41,0 | 34,6 | 36,3 | 35,4 | 30,4 |
| DIN 53517 | DVR 100°C/24 Std. | [%] | 48,0 | 40,4 | 43,1 | 45,4 | 40,1 |

| | | | | | | | |
|---|---|---|---|---|---|---|---|
| *): Kennzahl bezieht sich auf den gefundenen NCO-Wert des Präpolymeren aus Beispiel 2.4. ***): Zuggeschwindigkeit: 500 mm/min | | | | | | | |

Tabelle 5 zeigt Gießelastomerrezepturen, die mit den TPU-Rezepturen der Tabelle 4 weitestgehend identisch sind und sich nur im Herstellverfahren unterscheiden. Die im Zugversuch bestimmten mechanischen Eigenschaften (Spannungs- und Dehnungsdaten) der Gießelastomeren der Tabelle 5 bewegen sich ebenfalls auf dem von NDI-Elastomeren allgemein bekannten hohen Niveau, erreichen aber im Detail nicht ganz die Werte der TPU-Elastomeren. Gleiches gilt auch für die DVR-Werte und die Weiterreißfestigkeit (Graves).

Insgesamt zeigt der Vergleich der Tabellen 4 und 5, dass es durch das erfindungsgemäße Verfahren gelingt, TPUs auf Basis NDI so herzustellen, dass sie das Eigenschaftsniveau entsprechender Gießelastomeren auf NDI-Basis erreichen bzw. übertreffen.

### Beispiel 7: Herstellung eines TPUs auf Basis 4,4'-MDI (Vergleichsversuch)

80 Gew.-Tle. eines Hydroxylgruppen terminierten Poly(butylenadipatpolyols) mit einer OH-Zahl von 50 mg KOH/g, 20 Gew.-Tle. eines Hydroxylgruppen terminierten Poly(butylenadipatpolyols) mit einer OH-Zahl von 120 mg KOH/g und 1 Gew.-T1. 1,6-Hexandiol wurden in einer Weißblechdose auf 100°C erwärmt und mit 50 Gew.-Tln. 4,4'-Diphenylmethandiisocyanat (MDI) verrührt. Nach Abklingen der Exothermie wurden 24,83 Gew.-Tle. HQEE, 0,830 Gew.-Tle. Loxamid^{®} EBS und 0,1 Gew.-T1. Anox^{®} 20 PP zugegeben. Nach 190 Sekunden wurde die reagierende Schmelze auf Bleche ausgegossen. Nach dem Erkalten wurden die Gießplatten in Streifen geschnitten, granuliert und der weiteren Verarbeitung zugeführt.

**Tabelle 6: Rezepturen, Herstellung und mechanische Eigenschaften eines TPUs auf MDI-Basis**

| | **Beispiel** | | 7 |
|---|---|---|---|
| **Rezeptur:** | | | |
| | Polybutylenadipat, OHZ 50 | [Gew.-Tle.] | 80 |
| | Polybutylenadipat, OHZ 120 | [Gew.-Tle.] | 20 |
| | 1,6-Hexandiol | [Gew.-Tle.] | 1 |
| | Desmodur 44 (4,4'-MDI) | [Gew.-Tle.] | 50 |
| | HQEE | [Gew.-Tle.] | 24,83 |
| | Anox 20 AM | [Gew.-Tle.] | 0,1 |
| | Loxamid EBS | [Gew.-Tle.] | 4,9 |

| **Herstellung der Gieß platten:** | | | |
|---|---|---|---|
| | Blechtemperatur | [°C] | 110 |
| | Nachheizzeit | [h] | 24 |
| | Nachheiztemperatur | [°C] | 110 |

| **Thermoplastverarbeitung:** | | | |
|---|---|---|---|
| | Formtemperatur | [°C] | 80 |
| | Massetemperatur | [°C] | 220 |

| **Nachbehandlung der verspritzten MDI TPUs:** | | | |
|---|---|---|---|
| | Nachheizzeit | [h] | 12 |
| | Nachheiztemperatur | [°C] | 110 |
| | | | |

| **Mechanische Eigenschaften:** | | | |
|---|---|---|---|
| ISO 868 | Shore A | | 93 |
| ISO 868 | Shore D | | 44 |
| i.A.*) ISO 527-1,-3 | Spannung 100% | [MPa] | 8 |
| i.A.*) ISO 527-1,-3 | Spannung 300% | [MPa] | 20 |
| i.A.*) ISO 527-1,-3 | Reißspannung | [MPa] | 38 |
| i.A.*) ISO 527-1,-3 | Reißdehnung | [%] | 500 |
| ISO 34-1 | Weiterreißwiderstand | [kN/m] | 95 |
| ISO 4662 | Stoßelastizität | [%] | 35 |
| ISO 4649 | Abriebverlust | [mm³] | 25 |
| ISO 1183 | Dichte | [g/cm³] | 1,220 |
| ISO 815 | DVR 70°C/24 Std. | [%] | 35 |
| | Elastizitätsmodul E' (0°C) | [MPa] | 210 |
| | Elastizitätsmodul E' (130°C) | [MPa] | 36 |
| | Verhältnis E'(0°C)/E' (130°C) | | 5,8 |
| | | | |
| | | | |

| | | | |
|---|---|---|---|
| *): i.A.: in Anlehnung an; Zuggeschwindigkeit 200 mm/min | | | |

## Patentansprüche

1. Verfahren zur Herstellung von thermoplastischen Polyurethanen auf Basis 1,5-Naphthalindiisocyanat (NDI), **dadurch gekennzeichnet, dass**
a) 1,5-Naphthalindüsocyanat (NDI) mit
b) Polyolen mit einer Temperatur von 80°C bis 240°C, mit einem zahlenmittleren Molekulargewicht von 850 bis 3000 g/mol, mit bei 75°C gemessenen Viskositäten von < 1500 mPas und einer Funktionalität von 1,95 bis 2,15 aus der Gruppe bestehend aus Polyesterpolyolen, Poly-ε-caprolactonpolyolen, Polycarbonatpolyolen, Polyetherpolyolen und α-Hydro-ω̅-hydroxy-poly(oxytetramethylen)polyolen in einem Verhältnis von NCO- zu OH-Gruppen von 1,55:1 bis 2,35:1 kontinuierlich oder diskontinuierlich umgesetzt werden,
c) gegebenenfalls in Gegenwart von Hilfs- und Zusatzstoffen,
und nach der Umsetzung so abgekühlt wird, dass die Verweilzeit im
A) Temperaturbereich vom Reaktionsende bis 130°C den Wert von 1/2 Std. und
B) im Temperaturbereich vom Reaktionsende bis 110°C den Wert von 1,5 Std. und
C) im Temperaturbereich vom Reaktionsende bis 90°C den Wert von 7,5 Std. und
D) im Temperaturbereich vom Reaktionsende bis 70°C den Wert von 72 Std.
jeweils nicht überschritten wird und
wobei das nach der Umsetzungsreaktion noch vorhandene nicht reagierte NDI nicht entfernt wird,
d) das so erhaltene lagerstabile NCO-Prepolymer mit einem NCO-Gehalt von 2,5 bis 6 Gew.-% und mit bei 100°C gemessenen Viskositäten von < 5000 mPas mit Kettenverlängerern umgesetzt wird, wobei die Kennzahl (Verhältnis von NCO-Gruppen zu OH-Gruppen aus Polyol b) und Zerewitinoff aktiven Wasserstoffatomen aus Kettenverlängerer d)) 0,95:1 bis 1,10:1 beträgt,
e) das so erhaltene thermoplastische Polyurethan abgekühlt und granuliert wird.

2. Verfahren zur Herstellung von thermoplastischen Polyurethanen auf Basis von 1,5-Naphthalindiisocyanat nach Anspruch 1, **dadurch gekennzeichnet, dass** als Kettenverlängerer Verbindungen aus der Gruppe bestehend aus Ethylenglykol, 1,3-Propandiol, 1,4-Butandiol, 2,3-Butandiol, 1,5-Pentandiol, 1,6-Hexandiol und Hydrochinon-di(β-hydroxyethyl)ether verwendet werden.

3. Verfahren zur Herstellung von thermoplastischen Polyurethanen auf Basis von 1,5-Naphthalindiisocyanat nach Anspruch 1 oder 2, **dadurch gekennzeichnet, dass** das TPU eine Härte im Bereich von 70 Shore A bis 70 Shore D aufweist und die bei 70°C (24 Std.) gemessenen Werte für den Druckverformungsrest kleiner als 30% sind und das Verhältnis der E'-Moduli, gemessen bei 0°C und bei 130°C kleiner als 2, bevorzugt kleiner als 1,6, besonders bevorzugt kleiner als 1,5 ist.
